(19) Europäisches Patentamt / European Patent Office / Office européen des brevets

(11) **EP 2 095 613 B1**

(12) **EUROPEAN PATENT SPECIFICATION**

(45) Date of publication and mention
of the grant of the patent:
**27.02.2013 Bulletin 2013/09**

(21) Application number: **07827028.7**

(22) Date of filing: **08.11.2007**

(51) Int Cl.:
***H04L 29/12*** *(2006.01)*

(86) International application number:
**PCT/IB2007/054544**

(87) International publication number:
**WO 2008/059410 (22.05.2008 Gazette 2008/21)**

(54) **METHOD AND APPARATUS FOR ASSIGNING ADDRESSES TO NODES OF A COMMUNICATION NETWORK TREE STRUCTURE**

VERFAHREN UND VORRICHTUNG ZUM VERGEBEN VON ADRESSEN AN KNOTEN EINER KOMMUNIKATIONSNETZ-BAUMSTRUKTUR

PROCÉDÉ ET SYSTÈME D'ATTRIBUTION D'ADRESSES À DES N UDS D'UNE STRUCTURE ARBORESCENTE D'UN RÉSEAU DE COMMUNICATIONS

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **17.11.2006 EP 06124311**

(43) Date of publication of application:
**02.09.2009 Bulletin 2009/36**

(73) Proprietors:
• **Philips Intellectual Property & Standards GmbH 20099 Hamburg (DE)**
Designated Contracting States:
**DE**
• **Koninklijke Philips Electronics N.V. 5621 BA Eindhoven (NL)**

(72) Inventors:
• **LELKENS, Armand Michel Marie 5656 AE Eindhoven (NL)**
• **ERDMANN, Bozena 5656 AE Eindhoven (NL)**

(74) Representative: **Bekkers, Joost J.J Philips Intellectual Property & Standards P.O. Box 220 5600 AE Eindhoven (NL)**

(56) References cited:
**WO-A-2004/049131    US-A1- 2005 281 207**

**Description**

The invention relates to a method and an apparatus for assigning addresses to nodes of a communication network tree structure, particularly of a wireless control network tree structure.

For assigning addresses to nodes or devices of a communication network tree structure, an algorithm, shortly called the Cskip tree address assignment algorithm, proposed by IEEE 802.15.4 (and adopted by ZigBee) allows the ZigBee router to automatically assign network addresses to its children nodes, both routers and end devices. Yet, the Cskip tree address assignment algorithm and the inherent tree routing algorithm pay for their simplicity with very limited functionality, leading to inflexible topologies, with either wide but shallow trees or deep but narrow trees. Both options do not necessarily best match the physical control network topology, particularly the topology of communication networks in larger buildings, e.g. wireless lighting control networks.

US2005281207 provides an address assignment method for a ZigBee network cluster tree structure for allocating addresses by determining a network parameter differently for each device in the ZigBee network cluster tree structure to avoid the waste of address space. A ZigBee network device comprises a parameter determination section, a calculation section and a controller. The parameter determination section determines at least one network parameter. The calculation section calculates addresses for child devices based on determined network parameter and the controller assigns the addresses to the child devices of the ZigBee network device.

It is an object of the present invention to provide an improved method and an improved apparatus for assigning addresses to nodes of a communication network tree structure.

The object is solved by the independent claim(s). Further embodiments are shown by the dependent claim(s).

In order to achieve the object above, the invention provides a method for assigning addresses to nodes of a communication network tree structure, wherein each node corresponds to a network device of the communication network, comprising:

- determining first tree parameters of the communication network tree structure,
- assigning node addresses to nodes directly descending a first node, based on a predetermined assignment algorithm and the first tree parameters,
- determining a first number of available descendent nodes for a particular node, based on the predetermined assignment algorithm and the first tree parameters,
- determining second tree parameters for the particular node, such that a second number of available descendent nodes for the particular node, being determined based on the predetermined assignment algorithm and the second tree parameters, is equal or smaller than the first number of available descendent nodes, and
- assigning node addresses to nodes directly descending the particular node, based on the predetermined assignment algorithm and the second tree parameters.

In order to achieve the object above, the invention further provides an apparatus for assigning addresses to nodes of a communication network tree structure, wherein each node corresponds to a network device of the communication network, comprising:

- means for determining first tree parameters of the communication network tree structure,
- means for assigning node addresses to nodes directly descending a first node, based on a predetermined assignment algorithm and the first tree parameters,
- means for determining a first number of available descendent nodes for a particular node, based on the predetermined assignment algorithm and the first tree parameters,

- means for determining second tree parameters for the particular node, such that a second number of available descendent nodes for the particular node, being determined based on the predetermined assignment algorithm and the second tree parameters, is equal or smaller than the first number of available descendent nodes, and
- means for assigning node addresses to nodes directly descending the particular node, based on the predetermined assignment algorithm and the second tree parameters.

In order to achieve the object above, the invention further provides a network device of the communication network, comprising:

- means for determining first tree parameters of the communication network tree structure, used by its parent node;
- means for determining if a tree parameter change is required;
- means for determining a first number of available descendent nodes for this particular node, based on the predetermined assignment algorithm and the first tree parameters/Cskip offset;

- means for determining second tree parameters for the particular node based on user input, such that a second number of available descendent nodes for the particular node, being determined based on the predetermined assignment algorithm and the second tree parameters, is equal or smaller than the first number of available descendent nodes;
- means for assigning node addresses to child nodes directly descending the particular node, based on the predetermined assignment algorithm and the second tree parameters, and
- means for transmitting second tree parameters of the communication network tree structure to child nodes.

According to the invention, the addresses are assigned by the assigning node only to its direct children. The number of available descendent nodes means all successors.

The characteristic features according to the present invention provide the advantage that the invention may be used to realize very flexible network topologies, which can match the physical network topologies of for example wireless lighting control networks in larger buildings, thanks to the fact that the maximum depth and number of children and router children can be traded off against each other, thus defined flexibly per tree section, branch or even per every router on each depth level. In contrast to US20050281207, the invention aims for global topology optimization, whereas the address assignment method from the US20050281207 mainly aims for local optimization.

A possible tree structure according to the present invention is a ZigBee network cluster tree structure. The nodes of the tree structure comprise parent nodes and child nodes. The term "descendents" refers to all nodes successive to a particular node, at all depth levels. The "child nodes" are direct descendents or successors to a parent node at the next depth level. The term "first node" means a node arranged at a starting position or the root position of the tree structure. The "particular node" may be any node of the tree structure descendent to the first node.

The term "tree parameters" means any parameters suitable for defining the tree structure. The tree parameters may comprise a parameter defining a maximum number of child nodes per parent node, a parameter defining a maximum number of router nodes among the child nodes per parent node and a parameter defining a maximum tree depth.

The term "number of available descendent nodes" means the pool of addresses which can be spent on all successive nodes.

The term "predetermined assignment algorithm" means any algorithm or formula or set of algorithms or formulas suitable for calculating the node addresses and the number of available descendent nodes for any particular node. The predetermined assignment algorithm may be a Cskip tree address assignment algorithm.

The term "device" means any device suitable for establishing or joining a network, e.g. a large-scale wireless lighting control network. Typical examples of devices are routers or end devices, such as a switch, a lamp, a movement/light sensor or a lighting controller. ZigBee is a standard for embedded devices. Thus in ZigBee, as opposed to e.g. LON Works, the routers can host application objects; they just have to be mains-powered. Thus, e.g. in a lighting system, a lamp is expected to take the role of a router and the, battery-powered, switch will take the role of the end-device.

The basic idea of the invention is to propose a scheme combining Cskip advantages, like the simplicity of the Cskip address assignment and the tree routing, with the flexibility of dynamic address assignment schemes.

According to an embodiment of the inventive method, determining the second tree parameters may be performed by determining at least one of the second tree parameters and by determining any missing second tree parameter based on the determined at least one of the second tree parameters and the first and second number of available descendent nodes for the particular node. The at least one of the second tree parameters may be determined and set by a user.

The tree parameters may be provided to a child node by a parent node together with the child node's address. The first or second tree parameters, provided to a child node, may overwrite any tree parameter settings in the child node. Further, a Cskip offset of a parent node may be provided to a child node by a parent node together with the child node's address.

According to a further embodiment, the inventive method may further comprise a step of determining a third number of available descendent nodes for a particular second node being descendent to the particular node, based on the predetermined assignment algorithm and the second tree parameters, a step of determining third tree parameters for the particular second node, such that a fourth number of available descendent nodes for the particular second node, being determined based on the predetermined assignment algorithm and the third tree parameters, is equal or smaller than the third number of available descendent nodes, and a step of assigning node addresses to nodes directly descending the particular second node based on the predetermined assignment algorithm and the third tree parameters. The third tree parameters may be equal to the first tree parameters.

The invention also relates to a system wherein the devices of the system may be part of a large-scale wireless control network.

According to an embodiment the devices of the system may be arranged within a building, wherein the tree structure represents a topology of the building.

According to an embodiment, the established tree structure is only a physical tree structure, defining the parent-child relationship, and the actual communication in the system may happen according to any other logical structure, e.g. a mesh.

According to an embodiment the devices of the system may be ZigBee devices.

The invention will be described in more detail hereinafter with reference to exemplary embodiments. However, the invention is not limited to these exemplary embodiments.

Fig. 1 shows an address assignment scheme in a network;
Fig. 2 shows a diagram of method steps according to the invention;
Fig. 3 shows a block diagram of an apparatus according to the invention; and
Fig. 4 shows an exemplary address assignment scheme in a network according to the invention.

In the following, functional similar or identical elements may have the same reference numerals.

The Cskip-based tree address assignment algorithm, proposed by IEEE 802.15.4 of Inc. Institute of Electrical Electronics Engineers, IEEE Standard 802.15.4-2003, Part 15.4: Wireless Medium Access Control (MAC) and Physical Layer (PHY) Specifications for Low Rate Wireless Personal Area Networks (WPANs), New York: IEEE Press, 2003 and adopted by ZigBee, shortly called Cskip, allows a ZigBee router to automatically assign network addresses to children nodes, both routers and end devices, according to the formula:

$$A_{RouterChild} = A_{parent} + 1 + Cskip(d) \cdot m$$

$$A_{ZEDChild} = A_{parent} + Cskip(d) \cdot R_m + n$$

where:

$A_{parent}$    - address of the parent node
$A_{RouterChild}$    - to be assigned router address
$A_{ZEDChild}$    - to be assigned end device address
$m$    - current number of associated routers; $m \in \{0, R_m - 1\}$
$R_m$    - the maximum number of router children per parent
$n$    - current number of associated end devices; $n \in \{0, C_m - R_m - 1\}$
$C_m$    - the maximum number of child nodes per parent

$$Cskip(d) = \begin{cases} 1 + Cm \cdot (Lm - d - 1), & \text{if } Rm = 1 \\ \dfrac{1 + Cm - Rm - Cm \cdot Rm^{Lm-d-1}}{1 - Rm}, \end{cases}$$

ethevise
$d$    - actual depth of the parent node.

For this address assignment scheme to work, each ZigBee router device has to know the following parameters, according to IEEE802.15.4 constant all over the tree, i.e. in the entire network and according to ZigBee specified by the so-called ZigBee stack profiles, i.e. constant for the entire class of applications:

$C_m$ (nwkMaxChildren)    - maximum number of child nodes per parent device
$R_m$ (nwkMaxRouters)    - maximum number of router among the child nodes per parent device
$L_m$ (nwkMaxDepth)    - maximum tree depth.

In addition, each device has to know its own actual depth.

Thus, after initial pre-configuration, being part of a ZigBee application profile code, the addresses can be assigned to the nodes in a fully distributed manner based on just the Cskip parameters. No centralized address assignment server is required and no conflicts, inherent to random address assignment schemes, are possible.

This scheme has also the advantage of allowing for a simple tree routing scheme to be used. Each router can determine, by comparing its own and the destination's Cskip-based addresses, whether the destination is among its descendants or not. The message is then respectively forwarded down or up the tree. No memory consuming routing tables, no bandwidth consuming route discoveries are needed. Maybe it is not the most efficient routing scheme, but surely the most simple, ideal for very resource limited embedded devices.

Exemplary Cskip offset values and network addresses, for a network having nwkMaxChildren $C_m$=4, nwk-MaxRouters $R_m$=4 and nwkMaxDepth $L_m$=3, can be found in Table 134 of ZigBee specification, ZigBee Document 053474r06 (June 2005), Version 1.0, December 14th, 2004; 053474r06ZB_TSC-ZigBee-Specification-v1[1].0.pdf, www.zigbee.org, p. 224, sec. 2.7.1.4:

Table 1: Exemplary offset values

| Depth in the network. d | Offset value, *Cskip(d)* |
|---|---|
| 0 | 21 |
| 1 | 5 |
| 2 | 1 |
| 3 | 0 |

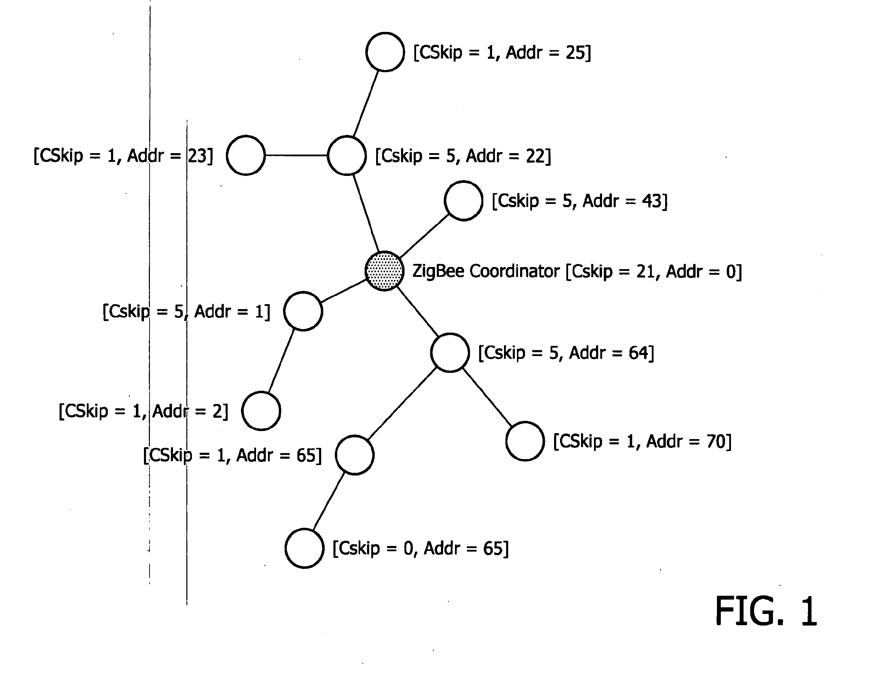

Fig. 1 (being Figure 54 of ZigBee specification, ZigBee Document 053474r06 (June 2005), Version 1.0, December 14th, 2004; 053474r06ZB_TSC-ZigBee-Specification-v1[1].0.pdf, www.zigbee.org, p. 224, sec. 2.7.1.4) shows an address assignment in an example network according to the ZigBee specification. The example network comprises a ZigBee Coordinator, with address 0 and a plurality of routers and end devices. The following devices are child nodes of the ZigBee Coordinator: routers with the addresses 1, 22, 43 and 64. Router device with the address 2 is the child of the router with the address 1. Router with the address 22 has two router child devices with the addresses 23 and 28. Router 43 doesn't have any children. Routers with the addresses 65 and 70 are children of the router with the address 64. Router 65 has a child router device with the address 66. The ZigBee Coordinator in depth 0 of the network has a Cskip offset value of 21, meaning that each branch starting at node 0 can consist of up to 21 nodes, i.e. each of its router child nodes (i.e. nodes with addresses 1, 22, 43 and 64) can have Cskip-1, i.e. 20 descendent nodes in total. The devices in depth 1, i.e. the devices with addresses 1, 22, 43 and 64 have a Cskip value of 5, the devices in depth 2, i.e. the devices with addresses 2, 23, 28, 65 and 70 have a Cskip value of 1 and the device in depth 3, i.e. the device with address 66 has a Cskip value of 0.

The Cskip tree address assignment algorithm pays for its simplicity and the inherent tree routing algorithm with very limited functionality, leading to inflexible topologies, with either wide but shallow trees or deep but narrow trees within the 16-bit address space (up to 65536 nodes). Wide but shallow trees are characterized by large $C_m$ and $R_m$ and small $L_m$ values. Deep but narrow trees are characterized by large $L_m$ and small $C_m$ and $R_m$ values. Both options do not necessarily best match the physical control network topology or the topology of larger buildings.

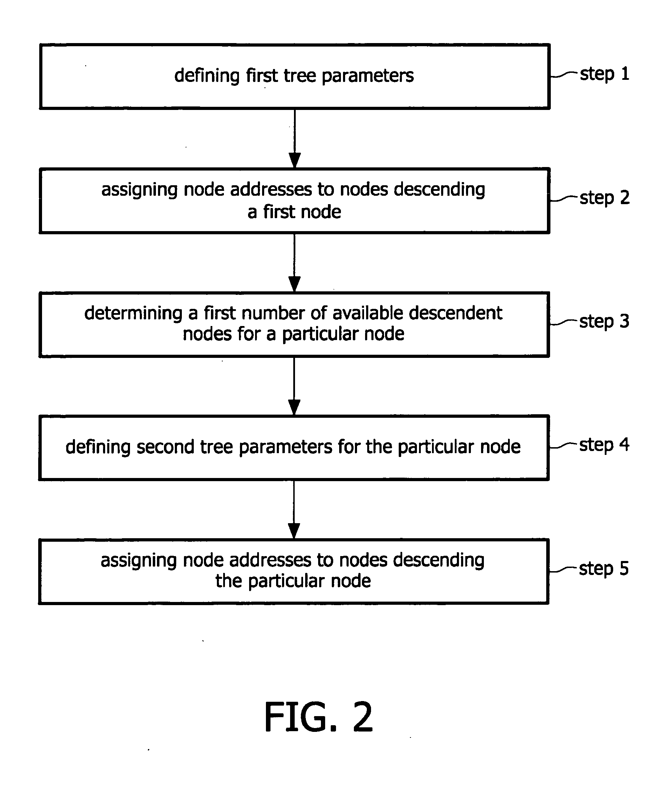

Fig. 2 shows steps of a method for assigning addresses to nodes of a tree structure, according to an embodiment of the present invention. As shown in Fig. 1, the tree structure may comprise a plurality of branches. Parent nodes of the tree structure are descended by child nodes. A child node can be a router node (able to accept children itself) or an end node, defining an end position of a branch. The tree structure can be defined by tree parameters. The tree parameters can define a maximum number of child nodes per parent node, a maximum number of parent nodes among the child nodes per parent node or a maximum tree depth.

In a first step, first tree parameters are determined or defined. The first tree parameters are selected in accordance with a topology to be represented by the tree structure, for example, a topology of a building. According to the present invention, the tree parameters do not have to be the same for the whole tree structure, but can change at particular nodes of the tree structure. Thus, the first tree parameters are selected in accordance with a topology to be represented by a first section of the tree structure. Typically the first section starts with a first node at a root position of the the tree structure.

In a second step, node addresses are assigned to nodes within the first section of the tree structure. Preferably the address assignment starts with the first node and continues with the descendent nodes. The node addresses are calculated by performing a predetermined assignment algorithm which takes into account the first tree parameters.

When reaching a first particular node, one or more of the first tree parameters can change to second tree parameters. The second tree parameters are selected in accordance with a topology to be represented by a second section of the tree structure. The addresses to be assigned to the nodes of the second section are calculated by using the second tree parameters. Thus, the second tree parameters have to be selected such that an available address pool for the particular node is not larger when calculated with the second tree parameters than when calculated with the first tree parameters. Thus, in a third step, a first number of available descendent nodes for the particular node is determined, based on the first tree parameters and the predetermined assignment algorithm. In a fourth step, second tree parameters for the particular node are selected and a second number of available descendent nodes for the particular node is determined, based on the second tree parameters and the predetermined assignment algorithm. If the second number of available descendent nodes for the particular node is equal or less than the first number, the selected second tree parameters are valid. Otherwise, the selected second tree parameters have to be replaced by different second tree parameters which lead to a second number of available descendent nodes being equal or less than the first number. This approach guarantees that the pool of addresses which can be spent on nodes being successive to the particular node becomes not larger due to the change of the tree parameters.

After having determined valid second tree parameters, in a fifth step, node addresses are assigned to nodes of the second section of the tree structure, directly descending the particular node. The node addresses are calculated based on the predetermined assignment algorithm and the second tree parameters.

The second section of the tree structure can cover a whole branch or only one or a number of nodes. In case, the second section is followed by a third section with third tree parameters, the third tree parameters can be selected as described in connection with the second tree parameters.

The method steps of the present invention can be performed in a different succession. For example, the definition of the second tree parameters can be performed before assigning any node addresses.

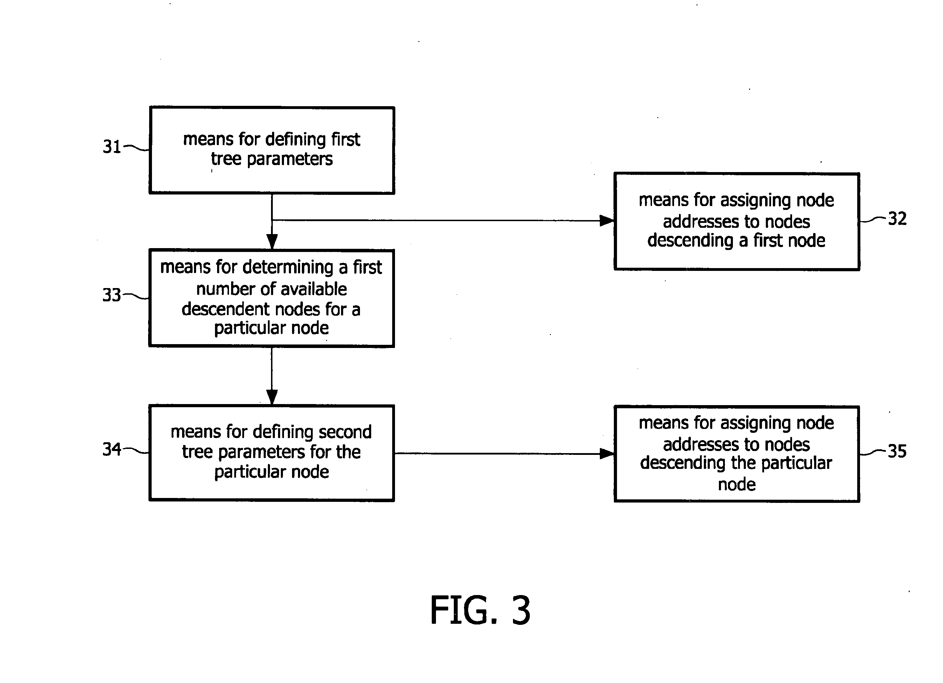

Fig. 3 shows a block diagram of an apparatus, node or device of a communication network for assigning addresses to nodes of the communication network tree structure according to an embodiment of the present invention. The method steps of the present invention can be performed by sections of the apparatus. The apparatus may comprise, means 31 for determining first tree parameters of the communication network tree structure, means 32 for assigning node addresses to nodes directly descending a first node, based on a predetermined assignment algorithm and the first tree parameters, means 33 for determining a first number of available descendent nodes for a particular node, based on the predetermined assignment algorithm and the first tree parameters, means 34 for determining second tree parameters for the particular node, such that a second number of available descendent nodes for the particular node, being determined based on the predetermined assignment algorithm and the second tree parameters, is equal or smaller than the first number of available descendent nodes, and means 35 for assigning node addresses to nodes directly descending the particular node, based on the predetermined assignment algorithm and the second tree parameters.

The means 31 for determining first tree parameters of the communication network tree structure are configured to provide the first tree parameters to the means 32 for assigning node addresses to nodes directly descending a first node and the means 33 for determining a first number of available descendent nodes for a particular node. The means 33 for determining the first number is configured to provide the first number of available descendent nodes to the means 34 for determining second tree parameters. The means 34 for determining second tree parameters are configured to provide the second tree parameters to the means 35 for assigning node addresses to nodes descending the particular node.

According to an embodiment of the present invention, the predetermined assignment algorithm is a Cskip tree address assignment algorithm.

Calculating the Cskip formula

$$Cskip(d) = \begin{cases} 1 + Cm \cdot (Lm - d - 1), & \text{if } Rm = 1 \\ \dfrac{1 + Cm - Rm - Cm \cdot Rm^{Lm-d-1}}{1 - Rm}, \end{cases}$$

ethersise

for an exemplary set of tree parameters: $L_m=7$, $C_m=12$, $R_m=4$, the following Cskip offset values per depth level d are obtained:

Table 2: Cskip offset values per depth level d

| Max. depth $L_m$ | Max. children $C_m$ | Max. routers $R_m$ | Current depth d | Cskip offset |
|---|---|---|---|---|
| 7 | 12 | 4 | 0 | 16381 |
| | | | 1 | 4093 |
| | | | 2 | 1021 |
| | | | 3 | 253 |
| | | | 4 | 61 |
| | | | 5 | 13 |
| | | | 6 | 1 |

Each new child router, at depth level d+1, gets from its parent, at depth level d, an address that is Cskip(d) higher than that of the previous child router. Thus the Cskip(d) offset defines the size of the address space reserved for each child router, at depth level d+1. The first address of this pool is the address of the child router itself.

The rest of the address space will be used by the child router to assign addresses to his descendants at depth level d+2 up to $L_m$, using the Cskip algorithm.

Although ZigBee specification defines the Cskip parameters as constants throughout the network, there is no technical need for each router to use the same values for $L_m$, $C_m$, $R_m$, as the pool of addresses can be spent using many different settings. For other values of $L_{m2}$, $C_{m2}$, and $R_{m2}$ the total number D(d) of descendants accomodable per router can be calculated as

$$D (d) = R_{m2} * Cskip(d+1) + C_{m2} - R_{m2.}$$

For example, the total pool of 16380 descendant nodes available for any of the 4 routers at depth d=1, for $L_m$=7, $C_m$=12, $R_m$=4 from the example above, could be exhausted in any of the following ways:

Table 3: Number of descendents accomodable per router.

| Max. depth $L_m$ | Max. children $C_m$ | Max. routers $R_m$ | Cskip ottset | Descendants number D |
|---|---|---|---|---|
| 7 | 12 | 4 | 4093 | 16380 |
| 2 | 16380 | 16380 | 1 | 16380 |
| 3 | 3250 | 4 | 3251 | 16250 |
| 3 | 127 | 127 | 128 | 16256 |
| 4 | 780 | 4 | 3901 | 16380 |
| 4 | 25 | 25 | 651 | 16275 |
| 5 | 192 | 4 | 4033 | 16320 |
| 5 | 11 | 11 | 1464 | 16104 |
| 6 | 47 | 4 | 3996 | 16027 |
| 6 | 10 | 6 | 2591 | 15550 |
| 7 | 2730 | 1 | 13651 | 16380 |
| 7 | 260 | 2 | 8061 | 16380 |
| 7 | 45 | 3 | 5446 | 16380 |
| 7 | 4 | 5 | 3125 | 15624 |
| 9 | 4 | 3 | 4373 | 13120 |
| 13 | 4 | 2 | 8189 | 16380 |

Table 3 shows only examples how the address space could be used and does not show all possible ways of reuse, nor to completely reuse the address space. Still more possible combinations, e.g. for other values of $L_m$ could be added.

Thus, the maximum depth of the tree structure and the maximum number of children and router children can be defined flexibly per tree section, per branch or even per every router on each depth level.

According to an embodiment, the present invention can be implemented in a building where several large rooms are connected via long, narrow corridors. Large distances need to be covered for the corridors. This requires many hops. Thus, $L_m$ should be set to a large value. Since the corridor is narrow, small $C_m/R_m$ values are sufficient. Inside the big rooms, however, a larger number of routers per parent would be preferred to to accommodate all devices and reduce the number of hops needed to reach all the nodes.

A "one-fit-all" Cskip solution is not possible, with network-wide defined parameters. Choosing tree parameters fitting the halls, e.g. $L_m$=7, $C_m$=4 and $R_m$=4, renders too small an address pool for the rooms. In this case, only 21 devices per each of the routers on depth=4 are available. A larger number of devices is preferable.

Table 4: Parameters fitting the halls

| Current depth d | Max. depth $L_m$ | Max. children $C_m$ | Max. routers $R_m$ | Cskip offset |
|---|---|---|---|---|
| 0 | 7 | 4 | 4 | 5461 |
| 1 | 7 | 4 | 4 | 1365 |
| 2 | 7 | 4 | 4 | 341 |
| 3 | 7 | 4 | 4 | 85 |
| 4 | 7 | 4 | 4 | 21 |

Choosing tree parameters fitting the rooms, e.g. $L_m$=7, $C_m$=31 and $R_m$=15 leads to improper values, i.e. outside the allowed range, with the calculated addresses exceeding the 16-bit address space (of up to 65536 addresses):

Table 5: Parameters fitting the rooms

| Current depth d | Max. depth $L_m$ | Max. children $C_m$ | Max. routers $R_m$ | Cskip offset |
|---|---|---|---|---|
| 0 | 7 | 31 | 15 | 25222097 |

Thus, one could use e.g. $L_m$=15, $C_m$=2 and $R_m$=2 for the corridors. Inside the big rooms, however, one would prefer a larger number of routers per parent to reduce the number of hops needed to reach all the nodes.
In the following, it is assumed that the big room is reached after four hops.

Table 6: $L_m$=15, $C_m$=2 and $R_m$=2

| Current depth d | Max. depth $L_m$ | Max. children $C_m$ | Max. routers $R_m$ | Cskip offset |
|---|---|---|---|---|
| 0 | 15 | 2 | 2 | 32767 |
| 1 | 15 | 2 | 2 | 16383 |
| 2 | 15 | 2 | 2 | 8191 |
| 3 | 15 | 2 | 2 | 4095 |
| 4 | 15 | 2 | 2 | 2047 |

So at the depth 3 each router has an address pool size of 4094. This address pool can be used in various ways. Some examples are given below:

Table 7: Some possible second tree parameters

| Current depth d | Max. depth $L_m$ | Max. children $C_m$ | Max. routers $R_m$ | Cskip offset | Descendants number D |
|---|---|---|---|---|---|
| 4 | 15 | 2 | 2 | 2047 | 4094 |
|   | 11 | 3 | 3 | 1093 | 3279 |

(continued)

| Current depth d | Max. depth $L_m$ | Max. children $C_m$ | Max. routers $R_m$ | Cskip offset | Descendants number D |
|---|---|---|---|---|---|
| | 10 | 11 | 3 | 1332 | 4004 |
| | 9 | 4 | 4 | 341 | 1364 |
| | 9 | 12 | 4 | 1021 | 4092 |
| | 8 | 7 | 7 | 400 | 2800 |
| | 8 | 10 | 7 | 571 | 4000 |
| | 8 | 26 | 5 | 807 | 4056 |
| | 7 | 15 | 15 | 241 | 3615 |
| | 7 | 36 | 10 | 397 | 3996 |
| | 7 | 55 | 8 | 496 | 4015 |
| | 7 | 132 | 5 | 793 | 4092 |
| | 6 | 63 | 63 | 64 | 4032 |
| | 6 | 194 | 20 | 195 | 4074 |
| | 6 | 300 | 10 | 301 | 3300 |

To cover a larger area with only a few extra hops, e.g. $R_m$=8 with $L_m$=7 can be chosen.

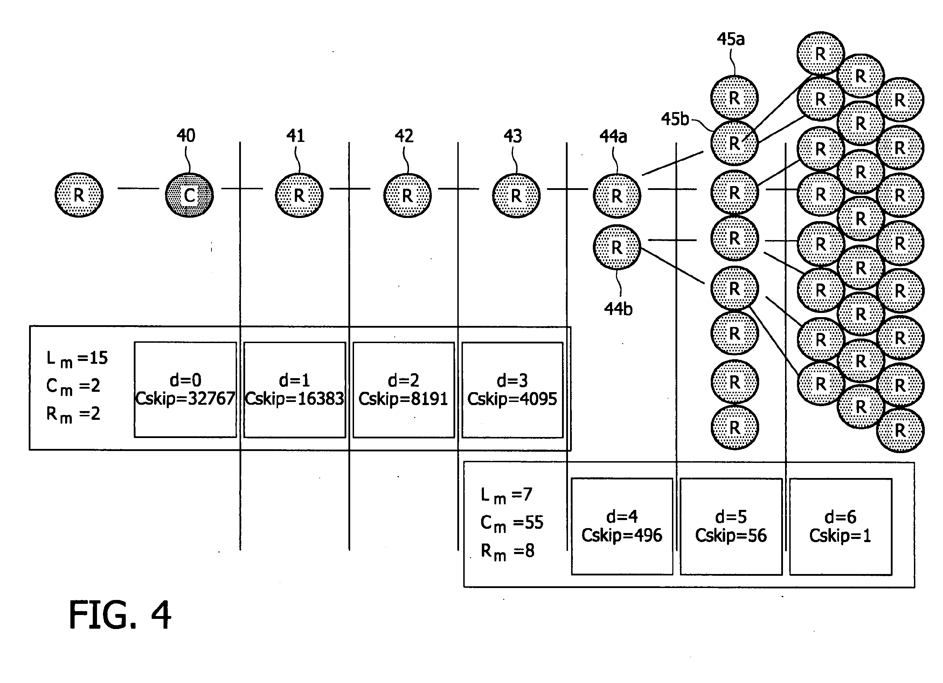

Fig. 4 shows a fragment (one branch) of schematic tree topology for the above selection. To each router 'R', starting from depth 4, up to $C_m$=55 children nodes could be associated, so there is plenty of opportunity to reach all nodes in the room. If $R_m$=8 would have been set for all the routers in the system, the maximum value of $L_m$ would be 5 and the corresponding maximum for $C_m$=14, with a total pool size of 65534. Since there are already four hops needed to reach the room, there would only one hop be left to use inside this room. With two routers at depth 4, this would allow to address only two times $C_m$ nodes, being 28 nodes.

The maximal depth of the tree, as shown in Fig. 4, is d=7. The tree structure is divided into two sections. A first section covers depth 0, 1, 2 and 3. A second section covers depth 4, 5 and 6.

The first section comprises a start node 40 in depth 0, a router node 41 in depth 1, a router node 42 in depth 2 and a further router node 43 in depth 3. The router node 41 is a child of the start node 40. The router node 42 is a child node of router node 41 and the router node 43 is a child node of router node 42. The first tree parameters $L_m$=15, $C_m$=2 and $R_m$=2 are valid for the first section of the tree structure. As shown in table 6, the first node 40 has a Cskip value of 32767, the router node 41 has a Cskip value of 16383, the router node 42 has a Cskip value of 8191 and the router node 43 has a Cskip value of 4095. As explained above, the first section of the tree structure is suitable for covering long halls of a building. In long halls there is no need for a parent node to have more than one or two child nodes.

The second section of the tree structure is suitable for covering the rooms of the building. In rooms, there is a need of parent nodes to have a plurality of child nodes. Therefore, second tree parameters, being different to the first tree parameters are valid for the second section. Any set of parameters shown in Table 7 could be used as second tree parameters. All parameters of Table 7 have in common, that the corresponding descendants number D is smaller than or equal to the Cskip value of the router node 43. According to this embodiment, the values $L_m$=7, $C_m$=55 and $R_m$=8 are chosen as second tree parameters. These second tree parameter allow parent nodes of the second section to have a plurality of child nodes. As shown in Fig. 4, there are two router nodes 44a, 44b in depth d=4. The router nodes 44a, 44b are child nodes of the router node 43. Each of the router nodes 44a, 44b has a plurality of child nodes. Exemplarily only two router nodes 45a, 45b in depth d=5, being child nodes of the router nodes 44a, 44b are referenced with reference signs. Again, each of the router nodes in depth d=5 has a plurality of descendent child nodes in depth d=6. By using the second tree parameters $L_m$=7, $C_m$=55 and $R_m$=8, the corresponding Cskip values for the router nodes of the second tree section can be calculated. As can be seen from Fig. 4, each of the router nodes 44a, 44b in depth d=4 has a Cskip value of 496, each of the router nodes in depth d=5 has a Cskip value of 56 and each of the router nodes in depth d=6 has a Cskip value of 1.

A user, based on the knowledge of the physical building topology and the intended network topology, pre-defines the parameters, maximum depth $L_m$, number of children $C_m$ and router children $R_m$, for a particular router.

The user can define all three parameters or just one of them. In the latter case the other parameters will be traded off, once the size of the available address pool, i.e. Cskip offset of the parent node, is known. The Cskip offset of the parent can be automatically provided to the child router by the parent during the association procedure, e.g. together with the child router's address. Alternatively, the child node can calculate the Cskip offset for the parent node, knowing $L_m$, $C_m$ and $R_m$, used by the parent and parent's depth.

The user can define the Cskip parameters as constant for the entire branch of descendants or as mandatory only for this particular router, e.g. defined as one status bit. For the former, the Cskip parameters could be transmitted by the parent router to the joining children router devices in-band during the association process, e.g. together with the child router's Cskip address, in a beacon sent upon beacon request or in the association response. On the joining child router, the in-band transmitted Cskip parameters should overwrite the default settings, e.g. defined by the ZigBee stack profile.

Optionally, the transmitted parameter could be able to also overwrite the Cskip parameters set on the child by the user, e.g. with compiled code or in-band from a console.

At least some of the functionality of the invention may be performed by hard- or software. In case of an implementation in software, a single or multiple standard microprocessors or microcontrollers may be used to process a single or multiple algorithms implementing the invention.

It should be noted that the word "comprise" does not exclude other elements or steps, and that the word "a" or "an" does not exclude a plurality. Furthermore, any reference signs in the claims shall not be construed as limiting the scope of the invention.

**Claims**

1. A method for assigning addresses to nodes of a communication network tree structure, wherein each node corresponds to a network device of the communication network, comprising:

   - determining first tree parameters ($C_m$, $R_m$, $L_m$) of the communication network tree structure in accordance with a topology to be represented by a first section of the tree structure, wherein the first tree parameters define a maximum number of child nodes per parent node ($C_m$), a maximum number of parent nodes among the child nodes per parent node ($R_m$) and a maximum tree depth ($L_m$) and are selected in accordance with the topology to be represented by the first section of the tree structure,
   - assigning node addresses to nodes (41, 42, 43, 44a, 44b) within the first section directly descending a first node (40), based on a predetermined assignment algorithm and the first tree parameters,
   - determining a first number of available descendent nodes for a particular node (44a, 44b), based on the predetermined assignment algorithm and the first tree parameters,
   - determining second tree parameters ($C_{m2}$, $R_{m2}$, $L_{m2}$) for the particular node in accordance with a topology to be represented by a second section of the tree structure, such that a second number of available descendent nodes for the particular node, being determined based on the predetermined assignment algorithm and the second tree parameters, is equal or smaller than the first number of available descendent nodes, wherein the second tree parameters define a second maximum number of child nodes per parent node ($C_{m2}$), a second maximum number of parent nodes among the child nodes per parent node ($R_{m2}$) and a second maximum tree depth ($L_{m2}$) and are selected in accordance with the topology to be represented by the second section of the tree structure, and
   - assigning node addresses to nodes (45a, 45b) within the second section directly descending the particular node, based on the predetermined assignment algorithm and the second tree parameters.

2. The method according to claim 1, wherein the nodes comprise parent nodes and child nodes, being descendent to a parent node, and wherein the step of determining first tree parameters comprises the steps of defining the maximum number of child nodes per parent node ($C_m$), the maximum number of parent nodes among the child nodes per parent node ($R_m$) and the maximum tree depth ($L_m$).

3. The method according to claim 1 or 2, wherein the predetermined assignment algorithm is a Cskip tree address assignment algorithm.

4. The method according to claim 3, wherein the nodes comprise end nodes and router nodes, wherein each end node is not descended by any node and each router node can be descended by other nodes and wherein the step of assigning node addresses to nodes is based on the formula:

$$A_{RouterChild} = A_{parent} + 1 + Cskip(d) \cdot m$$

$$A_{ZEDChild} = A_{parent} + Cskip(d) \cdot R_m + n$$

where:

$$Cskip(d) = \begin{cases} 1 + Cm \cdot (Lm - d - 1), & \text{if } Rm = 1 \\ \dfrac{1 + Cm - Rm - Cm \cdot Rm^{Lm-d-1}}{1 - Rm}, \end{cases}$$

otherwise

$A_{parent}$ - address of a parent node

$A_{RouterChild}$ - to be assigned router node address $A_{ZEDChild}$ - to be assigned end node address

m - current number of associated routers nodes; $m \in \{0, R_m - 1\}$ $R_m$ - the maximum number of routers nodes per parent node n - current number of associated end nodes; $n \in \{0, C_m - R_m - 1\}$ $C_m$ - the maximum number of child nodes per parent node $L_m$ - the maximum tree depth

d - actual depth of the parent node.

5. The method according to claim 4, wherein the first number of available descendent nodes for the particular node (4a, 4b) on depth d is based on the formula:

$$D_1(d) = Cskip(d-1) - 1.$$

6. The method according to one of claims 1 to 5, wherein the second number of available descendent nodes for the particular node (44a, 44b) on depth d is based on the formula:

$$D_2(d) = R_{m2} * Cskip(d) + C_{m2} - R_{m2},$$

wherein:

$C_{m2}$ - the second maximum number of child nodes per parent node
$R_{m2}$ - the second maximum number of parent nodes among the child nodes per parent node
$L_{m2}$ - the second maximum tree depth.

7. The method according to one of claims 1 to 6, wherein the step of determining the second tree parameters ($C_{m2}$, $R_{m2}$, $L_{m2}$) comprises:

- determining at least one of the second tree parameters,
- determining any missing second tree parameters based on the determined at least one of the second tree parameters and the first and second number of available descendent nodes for the particular node.

8. The method according to claim 1, further comprising:

- determining a third number of available descendent nodes for a particular second node being descendent to the particular node (44a, 44b), based on the predetermined assignment algorithm and the second tree parameters,
- determining third tree parameters for the particular second node, such that a fourth number of available descendent nodes for the particular second node, being determined based on the predetermined assignment algorithm and the third tree parameters, is equal or smaller than the third number of available descendent nodes,
- assigning node addresses to nodes directly descending the particular second node based on the predetermined assignment algorithm and the third tree parameters.

9. The method according to claim 8, wherein the third tree parameters are equal to the first tree parameters ($C_m$, $R_m$, $L_m$).

10. A computer program enabled to carry out the method according to the claims 1 to 9 when executed by a computer.

11. A record carrier storing a computer program according to claim 10.

12. An apparatus for assigning addresses to nodes of a communication network tree structure, wherein each node corresponds to a network device of the communication network, comprising:

- means (31) for determining first tree parameters ($C_m$, $R_m$, $L_m$) of the communication network tree structure in accordance with a topology to be represented by a first section of the tree structure, wherein the first tree parameters define a maximum number of child nodes per parent node ($C_m$), a maximum number of parent nodes among the child nodes per parent node ($R_m$) and a maximum tree depth ($L_m$) and are selected in accordance with the topology to be represented by the first section of the tree structure,
- means (32) for assigning node addresses to nodes (41, 42, 43, 44a, 44b) within the first section directly descending a first node (40), based on a predetermined assignment algorithm and the first tree parameters,
- means (33) for determining a first number of available descendent nodes for a particular node (44a, 44b), based on the predetermined assignment algorithm and the first tree parameters,
- means (34) for determining second tree parameters ($C_{m2}$, $R_{m2}$, $L_{m2}$) for the particular node in accordance with a topology to be represented by a second section of the tree structure, such that a second number of available descendent nodes for the particular node, being determined based on the predetermined assignment algorithm and the second tree parameters, is equal or smaller than the first number of available descendent nodes, wherein the second tree parameters define a second maximum number of child nodes per parent node ($C_{m2}$), a second maximum number of parent nodes among the child nodes per parent node ($R_{m2}$) and a second maximum tree depth ($L_{m2}$) and are selected in accordance with the topology to be represented by the second section of the tree structure, and
- means (35) for assigning node addresses to nodes (45a, 45b) within the second section directly descending the particular node, based on the predetermined assignment algorithm and the second tree parameters.

13. A network device of a communication network, comprising:

- means for determining first tree parameters of a communication network tree structure in accordance with a topology to be represented by a first section of the tree structure, wherein the first tree parameters define a maximum number of child nodes per parent node ($C_m$), a maximum number of parent nodes among the child nodes per parent node ($R_m$) and a maximum tree depth ($L_m$) and are selected in accordance with the topology to be represented by the first section of the tree structure;
- means for determining if a tree parameter change is required;
- means for determining a first number of available descendent nodes for a particular node, based on a predetermined assignment algorithm and first tree parameters;
- means for determining second tree parameters for the particular node in accordance with a topology to be represented by a second section of the tree structure based on user input, such that a second number of available descendent nodes for the particular node, being determined based on the predetermined assignment algorithm and the second tree parameters, is equal or smaller than the first number of available descendent nodes, wherein the second tree parameters define a second maximum number of child nodes per parent node ($C_{m2}$), a second maximum number of parent nodes among the child nodes per parent node ($R_{m2}$) and a second maximum tree depth ($L_{m2}$) and are selected in accordance with the topology to be represented by the second section of the tree structure;
- means for assigning node addresses to child nodes within the second section directly descending the particular node, based on the predetermined assignment algorithm and the second tree parameters, and
- means for transmitting second tree parameters of the communication network tree structure to child nodes.

14. A network device according to claim 13, wherein the means for determining first tree parameters are configured to determine the first tree parameters of a communication network tree structure used by its parent node.

15. A system comprising:

- an apparatus according to claim 12 or 13, and
- a plurality of router devices and end devices arranged in the tree structure, wherein each device corresponds to a node of the tree structure.

**Patentansprüche**

1. Verfahren zum Zuordnen von Adressen zu Knoten einer Kommunikationsnetzwerkbaumstruktur, wobei jeder Knoten einer Netzwerkvorrichtung des Kommunikationsnetzwerkes entspricht, wobei das Verfahren Folgendes umfasst:

   - das Bestimmen erster Baumparameter ($C_m$, $R_m$, $L_m$) der Kommunikationsnetzwerkbaumstruktur entsprechend einer Topologie, die durch einen ersten Abschnitt der Baumstruktur dargestellt werden soll, wobei die ersten Baumparameter eine maximale Anzahl Kindknoten je Elternknoten ($C_m$), eine maximale Anzahl Elternknoten um die Kindknoten herum je Elternknoten ($R_m$) und eine maximale Baumtiefe ($L_m$) definieren und entsprechend der Topologie, die durch den ersten Abschnitt der Baumstruktur dargestellt werden soll, selektiert werden,
   - das Zuordnen von Knotenadressen zu Knoten (41, 42, 43, 44a, 44b) innerhalb des ersten Abschnitts unmittelbar nach dem ersten Knoten (40), und zwar auf Basis eines vorher bestimmten Zuordnungsalgorithmus und der ersten Baumparameter,
   - das Bestimmen einer ersten Anzahl verfügbarer absteigender Knoten für einen bestimmten Knoten (44a, 44b), und zwar auf Basis des vorher bestimmten Zuordnungsalgorithmus und der ersten Baumparameter,
   - das Bestimmen zweiter Baumparameter ($C_{m2}$, $R_{m2}$, $L_{m2}$) für den bestimmten Knoten entsprechend einer Topologie, die durch einen zweiten Abschnitt der Baumstruktur dargestellt werden soll, so dass eine zweite Anzahl verfügbarer absteigender Knoten für den bestimmten Knoten, die auf Basis des vorher bestimmten Zuordnungsalgorithmus und der zweiten Baumparameter bestimmt wird, der ersten Anzahl verfügbarer absteigender Knoten entspricht oder kleiner als diese Anzahl ist, wobei die zweiten Baumparameter eine zweite maximale Anzahl Kindknoten je Elternknoten ($C_{m2}$), eine zweite maximale anzahl Elternknoten um die Kindknoten herum je Elternknoten ($R_{m2}$) und eine zweite maximale Baumtiefe ($L_{m2}$) definieren und entsprechend der Topologie, die durch den zweiten Abschnitt der Baumstruktur dargestellt werden soll, selektiert werden, und
   - das Zuordnen von Knotenadressen zu Knoten (45a, 45b) innerhalb des zweiten Abschnitts unmittelbar nach dem bestimmten Knoten, und zwar auf Basis des vorher bestimmten Zuordnungsalgorithmus und der zweiten Baumparameter.

2. Verfahren nach Anspruch 1, wobei die Knoten Elternknoten und Kindknoten enthalten, die zu einem Elternknoten absteigen, und wobei der Verfahrensschritt der Bestimmung erster Baumparameter die folgenden Schritte umfasst: das Definieren der maximalen Anzahl Kindknoten je Elternknoten ($C_m$), der maximalen Anzahl Elternknoten um die Kindknoten herum je Elternknoten ($R_m$) und der maximalen Baumtiefe ($L_m$).

3. Verfahren nach Anspruch 1 oder 2, wobei der vorher bestimmte Zuordnungsalgorithmus ein CSkip Baumadressenzuordnungsalgorithmus ist.

4. Verfahren nach Anspruch 3, wobei die Knoten Endknoten und Verteilerknoten aufweisen, wobei kein einziger Knoten von einem Endknoten abstammt und wobei andere Knoten von einem Verteilerknoten abstammen können und wobei der Schritt der Zuordnung von Knotenadressen zu Knoten auf der nachfolgenden Formel basiert:

$$A_{RouterChild} = A_{parent} + 1 + Cskip(d) \cdot m$$

$$A_{ZEDChild} = A_{parent} + Cskip(d) \cdot R_m + n$$

wobei

$$Cskip(d) = \begin{cases} 1 + Cm \cdot (Lm - d - 1), falls Rm = 1 \\ \underline{1 + Cm - Rm - Cm \cdot Rm} \end{cases}$$

sonst

$A_{parent}$ - Adresse eines Elternknotens
$A_{RouterChild}$ - zuzuordnende Verteilerknotenadresse
$A_{ZEDChild}$ - zuzuordnende Endknotenadresse
m - aktelle Anzahl assoziierter Verteilerknoten ; $m \in \{0, R_m -1\}$
$R_m$ - die maximale Anzahl Verteilerknoten je Elternknoten
n - aktuelle Anzahl assoziierter Endknoten; $n \in \{0, C_m - R_m -1\}$
$C_m$ - die maximale Anzahl Kindknoten je Elternknoten
$L_m$ - die maximale Baumtiefe
d - wirkliche Tiefe des Elternknotens.

5. Verfahren nach Anspruch 4, wobei die erste Anzahl verfürbarer absteigender Knoten für den bestimmten Knoten (4a, 4b) auf Tiefe d auf der nachfolgenden Formel basiert:

$$D_1 (d) = Cskip(d\text{-}1) - 1.$$

6. Verfahren nach einem der Ansprüche 1 bis 5, wobei die zweite Anzahl verfügbarer absteigender Knoten für den bestimmten Knoten (44a, 44b) auf Tiefe d auf der nachfolgenden Formal basiert:

$$D_2 (d) = R_{m2}*Cskip(d) + C_{m2} - R_{m2},$$

wobei:

$C_{m2}$ - die zweite maximale Anzahl Kindknoten je Elternknoten
$R_{m2}$ - die zweite maximale Anzahl Elternknoten um die Kindknoten je Elternknoten
$L_{m2}$ - die zweite maximale Baumtiefe.

7. Verfahren nach einem der Ansprüche 1 bis 6, wobei der Schritt der Bestimmung der zweiten Baumparameter ($C_{m2}$, $R_{m2}$, $L_{m2}$) Folgendes umfasst:

- das Bestimmen wenigstens eines der zweiten Baumparameter,
- das Bestimmen irgendeines fehlenden zweiten Baumparameters auf Basis des bestimmten wenigstens einen der zweiten Baumparameter und der ersten und zweiten Anzahl verfügbarer absteigender Knoten für den bestimmten Knoten.

8. Verfahren nach Anspruch 1, das weiterhin Folgendes umfasst:

- das Bestimmen einer dritten Anzahl verfügbarer absteigender Knoten für einen bestimmten zweiten Knoten, der von dem bestimmten Knoten (44a, 44b) abstammt, und zwar auf Basis des vorher bestimmten Zuordnungsalgorithmus und der zweiten Baumparameter,
- das Bestimmen dritter Baumparameter für den bestimmten zweiten Knoten, so dass eine vierte Anzahl verfügbarer absteigender Knoten für den bestimmten zweiten Knoten, die auf Basis des vorher bestimmten Zuordnungsalgorithmus und der dritten Baumparameter bestimmt wird, der dritten Anzahl verfügbarer absteigender Knoten entspricht oder kleiner ist als diese Anzahl,
- das Zuordnen von Knotenadressen zu Knoten, die unmittelbar von dem bestimmten Knoten abstammen, und zwar auf Basis des vorher bestimmten Zuordnungsalgorithmus und der dritten Baumparameter.

9. Verfahren nach Anspruch 8, wobei die dritten Baumparameter den ersten Baumparametern ($C_m$, $R_m$, $L_m$) entspre-chen.

10. Computerprogramm, vorgesehen zum Durchführen das Verfahren nach Anspruch den Ansprüchen 1 bis 9, wenn in einem Computer durchgeführt.

11. Aufzeichnungsträger mit einem Computerprogramm nach Anspruch 10.

12. Gerät zum Zuordnen von Adressen zu Knoten einer Kommunikationsnetzwerkbaumstruktur. Wobei jeder Knoten einer Netzwerkvorrichtung des Kommunikationsnetzwerkes entspricht, wobei das Gerät Folgendes umfasst:

- Mittel (31) zum Bestimmen erster Baumparameter ($C_m$, $R_m$, $L_m$) der Kommunikationsnetzwerkbaumstruktur entsprechend einer Topologie, die durch einen ersten Abschnitt der Baumstruktur dargestellt werden soll, wobei die ersten Baumparameter eine maximale Anzahl Kindknoten je Elternknoten ($C_m$), eine maximale Anzahl Elternknoten um die Kindknoten herum je Elternknoten ($R_m$) und eine maximale Baumtiefe ($L_m$) definieren und entsprechend der Topologie, die durch den ersten Abschnitt der Baumstruktur dargestellt werden soll, selektiert werden,
- Mittel (32) zum Zuordnen von Knotenadressen zu Knoten (41, 42, 43, 44a, 44b) innerhalb des ersten Abschnitts unmittelbar nach dem ersten Knoten (40), und zwar auf Basis eines vorher bestimmten Zuordnungsalgorithmus und der ersten Baumparameter,
- Mittel (33) zum Bestimmen einer ersten Anzahl verfügbarer absteigender Knoten für einen bestimmten Knoten (44a, 44b), und zwar auf Basis des vorher bestimmten Zuordnungsalgorithmus und der ersten Baumparameter,
- Mittel (34) zum Bestimmen zweiter Baumparameter ($C_{m2}$, $R_{m2}$, $L_{m2}$) für den bestimmten Knoten entsprechend einer Topologie, die durch einen zweiten Abschnitt der Baumstruktur dargestellt werden soll, so dass eine zweite Anzahl verfügbarer absteigender Knoten für den bestimmten Knoten, die auf Basis des vorher bestimmten Zuordnungsalgorithmus und der zweiten Baumparameter bestimmt wird, der ersten Anzahl verfügbarer absteigender Knoten entspricht oder kleiner als diese Anzahl ist, wobei die zweiten Baumparameter eine zweite maximale Anzahl Kindknoten je Elternknoten ($C_{m2}$), eine zweite maximale Anzahl Elternknoten um die Kindknoten herum je Elternknoten ($R_{m2}$) und eine zweite maximale Baumtiefe ($L_{m2}$) definieren und entsprechend der Topologie, die durch den zweiten Abschnitt der Baumstruktur dargestellt werden soll, selektiert werden, und
- Mittel (35) zum Zuordnen von Knotenadressen zu Knoten (45a, 45b) innerhalb des zweiten Abschnitts unmittelbar nach dem bestimmten Knoten, und zwar auf Basis des vorher bestimmten Zuordnungsalgorithmus und der zweiten Baumparameter.

13. Netzwerkvorrichtung eines Kommunikationsnetzwerkes, die Folgendes umfasst:

Mittel zum Bestimmen erster Baumparameter einer Kommunikationsnetzwerkbaumstruktur entsprechend einer Topologie, die durch einen ersten Abschnitt der Baumstruktur dargestellt werden soll, wobei die ersten Baumparameter eine maximale Anzahl Kindknoten je Elternknoten ($C_m$), eine maximale Anzahl Elternknoten um die Kindknoten herum je Elternknoten ($R_m$) und eine maximale Baumtiefe ($L_m$) definieren und entsprechend der Topologie, die durch den ersten Abschnitt der Baumstruktur dargestellt werden soll, selektiert werden,

- Mittel zum Bestimmen, ob eine Baumparameteränderung erforderlich ist;
- Mittel zum Bestimmen einer ersten Anzahl verfügbarer absteigender Knoten für einen bestimmten Knoten, und zwar auf Basis eines vorher bestimmten Zuordnungsalgorithmus und erster Baumparameter,
- Mittel zum Bestimmen zweiter Baumparameter für den bestimmten Knoten entsprechend einer Topologie, die durch einen zweiten Abschnitt der Baumstruktur auf Basis von Benutzereingaben dargestellt werden soll, so dass eine zweite Anzahl verfügbarer absteigender Knoten für den bestimmten Knoten, die auf Basis des vorher bestimmten Zuordnungsalgorithmus und der zweiten Baumparameter bestimmt wird, der ersten Anzahl verfügbarer absteigender Knoten entspricht oder kleiner als diese Anzahl ist, wobei die zweiten Baumparameter eine zweite maximale Anzahl Kindknoten je Elternknoten ($C_{m2}$), eine zweite maximale Anzahl Elternknoten um die Kindknoten herum je Elternknoten ($R_{m2}$) und eine zweite maximale Baumtiefe ($L_{m2}$) definieren und entsprechend der Topologie, die durch den zweiten Abschnitt der Baumstruktur dargestellt werden soll, selektiert werden,
- Mittel zum Zuordnen von Knotenadressen zu Kindknoten innerhalb des zweiten Abschnitts unmittelbar abstammend von dem bestimmten Knoten, und zwar auf Basis des vorher bestimmten Zuordnungsalgorithmus und der zweiten Baumparameter und
- Mittel zum Übertragen zweiter Baumparameter der Kommunikationsnetzwerkbaumstruktur zu Kindknoten.

14. Netzwerkvorrichtung nach Anspruch 13, wobei die Mittel zum Bestimmen erster Baumparameter dazu vorgesehen sind, die ersten Baumparameter einer von dem Elternknoten verwendeten Kommunikationsnetzwerkbaumstruktur zu bestimmen.

15. System, das Folgendes umfasst:

- ein Gerät nach Anspruch 12 oder 13, und
- eine Anzahl Verteilervorrichtungen und Endvorrichtungen, vorgesehen in der Baumstruktur, wobei jede Vorrichtung einem Knoten der Baumstruktur entspricht.

**Revendications**

1. Procédé pour affecter des adresses à des noeuds d'une structure arborescente d'un réseau de communication, dans lequel chaque noeud correspond à un dispositif de réseau du réseau de communication, comprenant les étapes suivantes consistant à :

- déterminer des premiers paramètres d'arbre ($C_m$, $R_m$, $L_m$) de la structure arborescente du réseau de communication selon une topologie à représenter par une première section de la structure arborescente dans laquelle les premiers paramètres d'arbre définissent un nombre maximum de noeuds enfants par noeud parent ($C_m$), un nombre maximum de noeuds parents parmi les noeuds enfants par noeud parent ($R_m$) et une profondeur d'arbre maximum ($L_m$), et sont sélectionnés selon la topologie à représenter par la première section de la structure arborescente ;
- affecter des adresses de noeud à des noeuds (41, 42, 43, 44a, 44b) à l'intérieur de la première section descendant directement d'un premier noeud (40) sur la base d'un algorithme d'affectation prédéterminé et des premiers paramètres d'arbre ;
- déterminer un premier nombre de noeuds descendants disponibles pour un noeud particulier (44a, 44b) sur la base de l'algorithme d'affectation prédéterminé et des premiers paramètres d'arbre ;
- déterminer des deuxièmes paramètres d'arbre ($C_{m2}$, $R_{m2}$, $L_{m2}$) pour le noeud particulier selon une topologie à représenter par une deuxième section de la structure arborescente de telle façon qu'un deuxième nombre de noeuds descendants disponibles pour le noeud particulier qui est déterminé sur la base de l'algorithme d'affectation prédéterminé et des deuxièmes paramètres d'arbre soit égal ou inférieur au premier nombre de noeuds descendants disponibles où les deuxièmes paramètres d'arbre définissent un deuxième nombre maximum de noeuds enfants par noeud parent ($C_{m2}$), un deuxième nombre maximum de noeuds parents parmi les noeuds enfants par noeud parent ($R_{m2}$) et une deuxième profondeur d'arbre maximum ($L_{m2}$), et sont sélectionnés selon la topologie à représenter par la deuxième section de la structure arborescente ; et
- affecter des adresses de noeud à des noeuds (45a, 45b) à l'intérieur de la deuxième section descendant directement du noeud particulier sur la base de l'algorithme d'affectation prédéterminé et des deuxièmes paramètres d'arbre.

2. Procédé selon la revendication 1, dans lequel les noeuds comprennent des noeuds parents et des noeuds enfants qui sont descendants d'un noeud parent, et dans lequel l'étape consistant à déterminer des premiers paramètres d'arbre comprend les étapes suivantes consistant à définir le nombre maximum de noeuds enfants par noeud parent ($C_m$), le nombre maximum de noeuds parents parmi les noeuds enfants par noeud parent ($R_m$) et la profondeur d'arbre maximum ($L_m$).

3. Procédé selon la revendication 1 ou selon la revendication 2, dans lequel l'algorithme d'affectation prédéterminé est un algorithme d'affectation d'adresse d'arbre Cskip.

4. Procédé selon la revendication 3, dans lequel les noeuds comprennent des noeuds d'extrémité et des noeuds routeurs, dans lequel chaque noeud d'extrémité n'est pas descendu par un noeud quelconque et chaque noeud routeur peut être descendu par d'autres noeuds et dans lequel l'étape consistant à affecter des adresses de noeud à des noeuds est basée sur la formule :

$$A_{RouterChild} = A_{parent} + 1 + Cskip(d) \cdot m$$

$$A_{ZEDChild} = A_{parent} + Cskip(d) \cdot R_m + n$$

dans laquelle :

$$\text{Cskip(d)} = \begin{cases} 1 + Cm \cdot (Lm - d - 1), si Rm = 1 \\ 1 + \dfrac{Cm - Rm - Cm \cdot Rm^{Lm-d-1}}{1 - Rm} \end{cases},$$

autrement

$A_{parent}$ - l'adresse d'un noeud parent

$A_{RouterChild}$ - à affecter l'adresse de noeud routeur

$A_{ZEDchild}$ - à assigner l'adresse de noeud d'extrémité

m - le nombre courant de noeuds routeurs associés ; me {0, $R_m$ -1}

$R_m$ - le nombre maximum de noeuds routeurs par noeud parent

n - le nombre courant de noeuds d'extrémité associés ; ne {0, $C_m$ - $R_m$ - 1}

$C_m$ - le nombre maximum de noeuds enfants par noeud parent

$L_m$ - la profondeur d'arbre maximum

d - la profondeur réelle du noeud parent.

5. Procédé selon la revendication 4, dans lequel le premier nombre de noeuds descendants disponibles pour le noeud particulier (4a, 4b) de la profondeur d est basé sur la formule :

$$D_1 (d) = \text{Cskip}(d-1) - 1.$$

6. Procédé selon l'une quelconque des revendications précédentes 1 à 5, dans lequel le deuxième nombre de noeuds descendants disponibles pour le noeud particulier (44a, 44b) de la profondeur d est basé sur la formule :

$$D_2 (d) = R_{m2}*\text{Cskip}(d) + C_{m2} - R_{m2},$$

dans laquelle :

$C_{m2}$ - le deuxième nombre maximum de noeuds enfants par noeud parent

$R_{m2}$ - le deuxième nombre maximum de noeuds parents parmi les noeuds enfants par noeud parent

$L_{m2}$ - la deuxième profondeur d'arbre maximum.

7. Procédé selon l'une quelconque des revendications précédentes 1 à 6, dans lequel l'étape consistant à déterminer les deuxièmes paramètres d'arbre ($C_{m2}$, $R_{m2}$, $L_{m2}$) comprend les étapes suivantes consistant à :

- déterminer au moins un des deuxièmes paramètres d'arbre ;
- déterminer n'importe quels deuxièmes paramètres d'arbre manquants sur la base de l'au moins un des deuxièmes paramètres d'arbre déterminés et le premier et le deuxième nombre de noeuds descendants disponibles pour le noeud particulier.

8. Procédé selon la revendication 1, comprenant en outre les étapes suivantes consistant à :

- déterminer un troisième nombre de noeuds descendants disponibles pour un deuxième noeud particulier, qui est descendant du noeud particulier (44a, 44b), sur la base de l'algorithme d'affectation prédéterminé et des deuxièmes paramètres d' arbre ;
- déterminer des troisièmes paramètre d'arbre pour le deuxième noeud particulier de telle façon qu'un quatrième nombre de noeuds descendants disponibles qui est déterminé sur la base de l'algorithme d'affectation prédéterminé et des troisièmes paramètres d'arbre soit égal ou inférieur au troisième nombre de noeuds descendants disponibles ; et
- affecter des adresses de noeud aux noeuds descendant directement du deuxième noeud particulier sur la base de l'algorithme d'affectation prédéterminé et des trois paramètres d'arbre.

9. Procédé selon la revendication 8, dans lequel les troisièmes paramètres d'arbre sont égaux aux premiers paramètres

d'arbre ($C_m$, $R_m$, $L_m$).

10. Programme informatique qui est activé pour mettre en oeuvre le procédé selon les revendications précédentes 1 à 9 lorsqu'il est exécuté par un ordinateur.

11. Support d'enregistrement stockant un programme informatique selon la revendication 10.

12. Appareil pour affecter des adresses à des noeuds d'une structure arborescente d'un réseau de communication, dans lequel chaque noeud correspond à un dispositif de réseau du réseau de communication, comprenant :

- des moyens (31) pour déterminer des premiers paramètres d'arbre ($C_m$, $R_m$, $L_m$) de la structure arborescente du réseau de communication selon une topologie à représenter par une première section de la structure arborescente dans laquelle les premiers paramètres d'arbre définissent un nombre maximum de noeuds enfants par noeud parent ($C_m$), un nombre maximum de noeuds parents parmi les noeuds enfants par noeud parent ($R_m$) et une profondeur d'arbre maximum ($L_m$), et sont sélectionnés selon la topologie à représenter par la première section de la structure arborescente ;
- des moyens (32) pour affecter des adresses de noeud à des noeuds (41, 42, 43, 44a, 44b) à l'intérieur de la première section descendant directement d'un premier noeud (40) sur la base d'un algorithme d'affectation prédéterminé et des premiers paramètres d'arbre ;
- des moyens (33) pour déterminer un premier nombre de noeuds descendants disponibles pour un noeud particulier (44a, 44b) sur la base de l'algorithme d'affectation prédéterminé et des premiers paramètres d' arbre ;
- des moyens (34) pour déterminer des deuxièmes paramètres d'arbre ($C_{m2}$, $R_{m2}$, $L_{m2}$) pour le noeud particulier selon une topologie à représenter par une deuxième section de la structure arborescente de telle façon qu'un deuxième nombre de noeuds descendants disponibles pour le noeud particulier qui est déterminé sur la base de l'algorithme d'affectation prédéterminé et des deuxièmes paramètres d'arbre soit égal ou inférieur au premier nombre de noeuds descendants disponibles où les deuxièmes paramètres d'arbre définissent un deuxième nombre maximum de noeuds enfants par noeud parent ($C_{m2}$), un deuxième nombre maximum de noeuds parents parmi les noeuds enfants par noeud parent ($R_{m2}$) et une deuxième profondeur d'arbre maximum ($L_{m2}$), et sont sélectionnés selon la topologie à représenter par la deuxième section de la structure arborescente ; et
- des moyens (35) pour affecter des adresses de noeud à des noeuds (45a, 45b) à l'intérieur de la deuxième section descendant directement du noeud particulier sur la base de l'algorithme d'affectation prédéterminé et des deuxièmes paramètres d'arbre.

13. Dispositif de réseau d'un réseau de communication, comprenant :

- des moyens pour déterminer des premiers paramètres d'arbre d'une structure arborescente d'un réseau de communication selon une topologie à représenter par une première section de la structure arborescente dans laquelle les premiers paramètres d'arbre définissent un nombre maximum de noeuds enfants par noeud parent ($C_m$), un nombre maximum de noeuds parents parmi les noeuds enfants par noeud parent ($R_m$) et une profondeur d'arbre maximum ($L_m$), et sont sélectionnés selon la topologie à représenter par la première section de la structure arborescente ;
- des moyens pour déterminer si un changement du paramètre d'arbre est nécessaire ;
- des moyens pour déterminer un premier nombre de noeuds descendants disponibles pour un noeud particulier sur la base d'un algorithme d'affectation prédéterminé et des premiers paramètres d'arbre ;
- des moyens pour déterminer des deuxièmes paramètres d'arbre pour le noeud particulier selon une topologie à représenter par une deuxième section de la structure arborescente sur la base de l'entrée d'utilisateur de telle façon qu'un deuxième nombre de noeuds descendants disponibles pour le noeud particulier qui est déterminé sur la base de l'algorithme d'affectation prédéterminé et des deuxièmes paramètres d'arbre soit égal ou inférieur au premier nombre de noeuds descendants disponibles où les deuxièmes paramètres d'arbre définissent un deuxième nombre maximum de noeuds enfants par noeud parent ($C_{m2}$), un deuxième nombre maximum de noeuds parents parmi les noeuds enfants par noeud parent ($R_{m2}$) et une deuxième profondeur d'arbre maximum ($L_{m2}$), et sont sélectionnés selon la topologie à représenter par la deuxième section de la structure arborescente ;
- des moyens pour affecter des adresses de noeud à des noeuds enfants à l'intérieur de la deuxième section descendant directement du noeud particulier sur la base de l'algorithme d'affectation prédéterminé et des deuxièmes paramètres d' arbre ; et
- des moyens pour transmettre des deuxièmes paramètres d'arbre de la structure arborescente du réseau de communication à des noeuds enfants.

**14.** Dispositif de réseau selon la revendication 13, dans lequel les moyens pour déterminer des premiers paramètres d'arbre sont configurés de manière à déterminer les premiers paramètres d'arbre d'une structure arborescente d'un réseau de communication qui sont utilisés par son noeud parent.

**15.** Système comprenant :

- un appareil selon la revendication 12 ou selon la revendication 13 ; et
- une pluralité de dispositifs routeurs et de dispositifs d'extrémité qui sont agencés dans la structure arborescente dans laquelle chaque dispositif correspond à un noeud de la structure arborescente.

FIG. 4

```
31 ──┐  ┌─────────────────────────┐
      │  │  means for defining first │
      └──│     tree parameters       │
         └─────────────────────────┘
                    │
                    │         ┌──────────────────────────┐
                    │         │  means for assigning node │
                    └────────▶│     addresses to nodes    │──32
                    │         │  descending a first node  │
                    ▼         └──────────────────────────┘
         ┌─────────────────────────┐
         │ means for determining a first │
33 ──────│   number of available     │
         │  descendent nodes for a   │
         │      particular node      │
         └─────────────────────────┘
                    │
                    ▼
         ┌─────────────────────────┐         ┌──────────────────────────┐
         │ means for defining second │         │  means for assigning node │
34 ──────│  tree parameters for the  │────────▶│     addresses to nodes    │──35
         │      particular node      │         │  descending the particular │
         └─────────────────────────┘         │          node             │
                                              └──────────────────────────┘
```

# FIG. 3

```
┌────────────────────────────────────────────────────────┐
│              defining first tree parameters            │──step 1
└────────────────────────────────────────────────────────┘
                            │
                            ▼
┌────────────────────────────────────────────────────────┐
│        assigning node addresses to nodes descending    │──step 2
│                      a first node                      │
└────────────────────────────────────────────────────────┘
                            │
                            ▼
┌────────────────────────────────────────────────────────┐
│    determining a first number of available descendent  │──step 3
│             nodes for a particular node                │
└────────────────────────────────────────────────────────┘
                            │
                            ▼
┌────────────────────────────────────────────────────────┐
│   defining second tree parameters for the particular node │──step 4
└────────────────────────────────────────────────────────┘
                            │
                            ▼
┌────────────────────────────────────────────────────────┐
│        assigning node addresses to nodes descending    │──step 5
│                   the particular node                  │
└────────────────────────────────────────────────────────┘
```

# FIG. 2

FIG. 1

[CSkip = 1, Addr = 25]

[CSkip = 1, Addr = 23]

[Cskip = 5, Addr = 22]

[Cskip = 5, Addr = 43]

ZigBee Coordinator [Cskip = 21, Addr = 0]

[Cskip = 5, Addr = 1]

[Cskip = 5, Addr = 64]

[CSkip = 1, Addr = 2]

[CSkip = 1, Addr = 70]

[CSkip = 1, Addr = 65]

[Cskip = 0, Addr = 65]

EP 2 095 613 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• US 2005281207 A

• US 20050281207 A

### Non-patent literature cited in the description

• Wireless Medium Access Control (MAC) and Physical Layer (PHY) Specifications for Low Rate Wireless Personal Area Networks (WPANs. IEEE Press, 2003